Europäisches Patentamt

**European Patent Office**

**Office européen des brevets**

(11) Publication number: **0 185 285**
**A2**

(12) # EUROPEAN PATENT APPLICATION

(21) Application number: **85115619.0**

(22) Date of filing: **09.12.85**

(51) Int. Cl.⁴: **G 01 F 23/22**

(30) Priority: **18.12.84 US 683084**

(43) Date of publication of application:
**25.06.86 Bulletin 86/26**

(84) Designated Contracting States:
**BE CH DE FR GB IT LI NL SE**

(71) Applicant: **ABBOTT LABORATORIES**
**14th Street and Sheridan Road North St**
**North Chicago Illinois 60064(US)**

(72) Inventor: **Eich, William**
**23764 Clover Hill Lane**
**Barrington, IL 60010(US)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Liquid level measurement apparatus.**

(57) An apparatus for measurement of a column of substantially transparent liquid, or for the detection of the presence or absence of the substantially transparent liquid at a selected level, in a transparent, substantially cylindrical tube is disclosed. A light source directs light across the cylindrical axis of the tube. Opposite the light source with respect to the cylindrical axis of the tube is located light sensor means capable of distinguishing between light focused by the substantially transparent liquid when the liquid is present at the sensor level, and light diffused by the empty tube when the substantially transparent liquid is not present. An array of sensors provides the capability of measuring the column of liquid quantitatively.

FIG. 1

## LIQUID LEVEL MEASUREMENT APPARATUE

Technical Field

This invention relates to an apparatus for measurement of a column of substantially transparent liquid, or for the detection of the presence or absence of the substantially transparent liquid at a selected level in a transparent, substantially cylindrical tube. More particularly, it relates to such an apparatus, adapted for use to automatically detect whether appropriate reagents or other materials have been added to a test tube or cuvette for automated chemical analysis.

Automated clinical diagnostic and chemical measurements are quick and efficient. However, they are not foolproof. They generally rely upon careful pre-measurement preparation of samples and reagents. Improper preparation of a sample, or incorrect or missing reagents, can produce inaccurate or meaningless results. Even a matter as simple as the proper dilution of a sample will affect the scale of resulting readings. Such errors may not be readily detectable from the results obtained from the test. Therefore, it would be desirable for automated testing instruments to be able to detect whether the sample has been properly prepared and the reagents appropriate to the test have been added. In some cases, this can be done by simply determining whether the liquid level of the sample is at a predetermined level in a sample test tube or cuvette. For example, if proper performance of the test requires the use of 1 ml. of sample and 5 ml. of reagents, a level detector designed to detect liquid at the 6 ml. level in a cuvette or test tube could determine whether the reagents have been added to the sample. In a more complex arrangement, quantitative measurement of the liquid volume can indicate which reagent has been added, or whether a stirring bar or other object is present in the tube.

In determining the liquid level or volume, however, certain difficulties are encountered. First, each sample is isolated in its own individual cuvette or test tube. Also, the detector must operate without contaminating the sample or reagents. Thus, the level detection method must be noninvasive. In addition, the varying chemical composition of samples and reagents in the test tube or cuvette rules out, in general, level detection by the use of the liquid's transmission or absorption spectra. Finally, if the liquid is transparent or substantially transparent, it cannot be used for level detection by allowing it to break a beam of light.

## Brief Description of the Drawings

FIGURE 1 is a section view of the physical layout of one embodiment of an apparatus according to this invention. The section is taken through the axis of the cuvette 10.

FIGURE 2 is a section view of a second embodiment of an apparatus according to this invention.

FIGURE 3 is a schematic diagram of the electronic circuit used in conjunction with the apparatus of FIGURE 1.

## Disclosure of the Invention

This invention provides an apparatus for measurement of a column of substantially transparent

0185285

liquid, or for the detection of the presence or absence of the substantially transparent liquid at a selected level in a transparent, substantially cylindrical tube. With reference to the drawings, in the apparatus, a light source 12 directs light 14 across the cylindrical axis of the tube 10. Opposite the light source 12 with respect to the cylindrical axis of the tube 10 is located a light sensor capable of distinguishing between light focused by the substantially transparent liquid 18 when the liquid is present in the tube at the sensor level, and light diffused by the empty tube when the substantially transparent liquid is not present.

This invention is based on the observation that a cylindrical glass or plastic vessel generally diffuses a beam of light passing through it. However, when a transparent liquid, such as alcohol or water, is present in the tube, the column of liquid, shaped by the vessel, operates as a lens to focus a narrow band of light on a surface opposite the light source with respect to the tube. The vertical length of the band is directly proportional to the height of the liquid in the tube. In addition, the bottom of the band will be absent if an opaque object is present at the bottom of the tube. The apparatus of this invention exploits these phenomena.

In order for the apparatus of this invention to operate, it must be able to take advantage of the physical/optical principles described above. In particular, the liquid whose level is to be detected must be transparent or substantially transparent. The transparency can be measured in terms of Nephelometric Tubidity Units, by art-recognized methods. In general, the term "substantially transparent" refers to a liquid having a turbidity reading of less than 100 NTU. At the same time, although it is important that the liquid be transparent or substantially transparent, it is not

0185285

necessary that the liquid be entirely colorless. Thus, this apparatus can be used in conjunction with spectrophotometric measurement equipment.

Like the liquid, the tube or cuvette 10 to be used should be transparent or substantially transparent. It need not be entirely colorless. It is also important that the tube or cuvette be substantially cylindrical, i.e. ranging in cross-section from circular to elliptical, where the elliptical shape has a minor-axis-to-major-axis ratio of at least about 0.75. The tube can be made of any convenient material, such as glass or plastic, so long as the requirement of transparency is met and the refractive index of the material is such that it does not interfere with operation of the optical principles involved in the function of the apparatus herein. Of course, the material should also be selected to be impervious to the samples and reagents used in the analytical method. Especially preferred is a glass or plastic tube of circular cross-section having a flat or hemispherical base.

Any conventional light source capable of generating radiation in the range from infrared to ultraviolet can be used as the light source means of this apparatus. A monochromatic or coherent light source is not necessary, but the light source should be sufficiently intense and sufficiently collimated to project a beam of light across the cylindrical axis of the tube containing the liquid. Lasers, light emitting diodes, and other solid state light sources can be used but are not necessary. A conventional incandescent lamp is satisfactory.

Opposite the light source with respect to the cylindrical axis of the tube is located a light sensor means. The light sensor means employs an optical transducer 16, such as a photocell, photoresistor, photodiode, phototransistor, or the like. Distances of the light source 12 and the transducer 16 from the tube 10 are not especially critical, within the focusing range of the tube and the effective range of the light source. Distances from the tube of up to 7.5 cm. and 2.5 cm. have been used successfully for the light source and the transducer, respectively. Shorter distances can be used if space is at a premium. The tube need not be motionless, so long as the reading is taken when the tube is interposed at a known level between the light source and the optical transducer. The optical transducer of the light sensor means is located at the selected level, preferably immediately below the expected surface 20 of the liquid 18 so that the curvature of the meniscus 22 of the liquid does not interfere with light transmission.

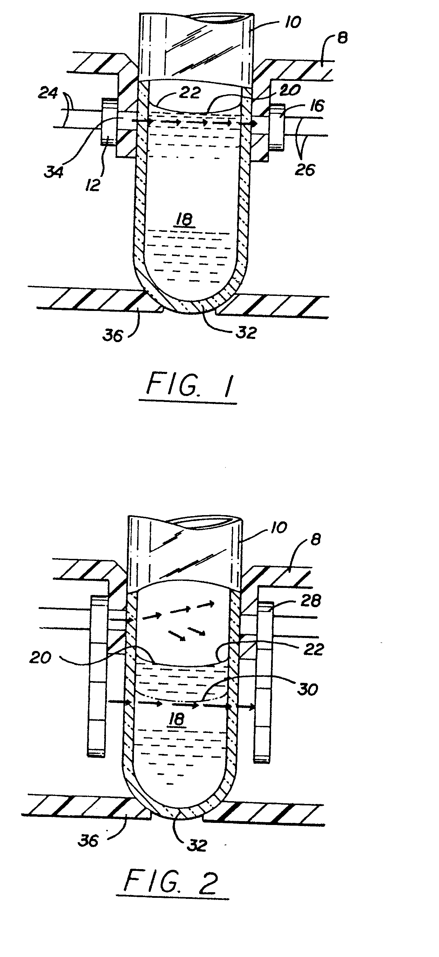

A vertical array of such devices can be used to provide volumetric measurements. Since the vertical length of the focused band of light is directly proportional to the height of the liquid in the tube, with a tube of known volume the actual volume of the liquid can be determined, rather than simply its presence or absence at a selected level by determining which of the transducers in the array are activated by light focused by the substantially transparent liquid and which are not. In this second embodiment, as shown in FIGURE 2, thin film arrays of optical transducers 28 spaced 1 mm. apart can provide volume measurements with precision on the order of 100 ul, and thus can readily measure different liquid levels 20 and 30. In addition, the presence of a foreign object, such as a stirring bar or reagent-coated bead, can be detected by such an array by detecting a break in the band of light at the bottom of the array, since the object will interfere with the focusing ability of the liquid column at the bottom of the tube.

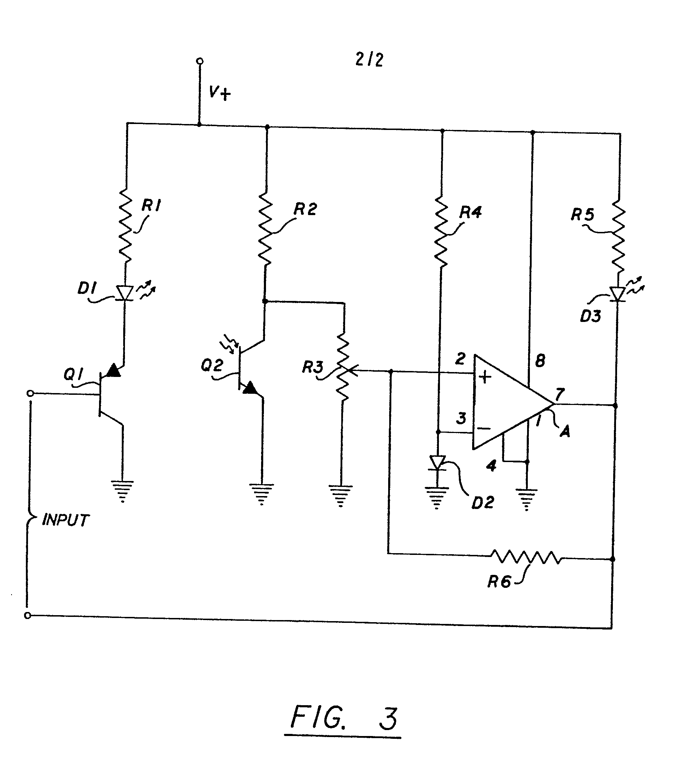

However configured, the light sensor means further involves a comparator or similar circuit as illustrated in FIGURE 3, connected to the optical transducer or transducers and designed to operate in conjunction with the optical transducer or transducers to distinguish between a narrow, intense beam of light focused by the substantially transparent liquid when the liquid is present in the tube at the selected level, and a lower level of diffused light transmitted by the empty tube when the substantially transparent liquid is not present at the selected level. In general this simply involves adjusting the sensitivity of the light sensor means to trigger at the higher level of the focused light. The circuit provides one output when the presence of liquid is detected, i.e., a focused beam is detected, and another signal when no liquid is detected, i.e., a diffused beam. The output signal can be, for example, a binary 1 or 0 or binary word, as appropriate to the remainder of the apparatus, or it can simply be an analog signal which turns an indicator on or off, as desired. In any event, design of the comparator or other circuit and its associated signal output circuits are not critical, are within the level of ordinary skill in the electronic arts, and, standing alone, form only a portion of this invention.

## Example

FIGURE 1 illustrates a preferred embodiment of the apparatus of this invention, in which a cylindrical glass tube end having a hemispherical end 32 is lodged in a positioning holder 8. The base 36 of the positioning holder 8 assures that each successive tube 10 is held at a known position with respect to light source means 12 and optical transducer 16. In the tube is a substantially transparent liquid, 18, having surface 20 with meniscus 22. It is desired to determine whether the liquid 18 is present at a predetermined level 34. At level 34 is located a light source 12, in this instance a light emitting diode, which is connected to the circuit of FIGURE 3 via leads 24. Upon being supplied with electric current via leads 24, light source 12 provides a beam of light 14 which traverses the tube 10 and the substantially transparent liquid 18. By virtue of the substantially transparent liquid 18, the light 14 is focused, rather than diffused, and thus falls with greater intensity upon optical transducer 16, which is mounted in the positioning holder at a point opposite light source 12 with respect to the cylindrical axis of the tube 10. Optical transducer 16 is in this instance a phototransistor, which is activated by a beam of light 14 from light source 12 being focused upon it. Phototransistor 16 is connected to the circuit of FIGURE 3 via leads 26.

FIGURE 3 illustrates in schematic fashion the comparator circuit used in conjunction with the physical apparatus illustrated in FIGURE 1. Diode D1 is preferably an LD 271 light emitting diode, and corresponds to light source 12 of FIGURE 1. The connections of diode D1 to the remainder of the comparator circuit are illustrated as leads 24 in FIGURE 1. Transistor Q1 is preferably a 2N3906 transistor. When the base of Q1 is appropriately biased by input lead 1, transistor Q1 conducts, and the voltage supplied via power lead V+ and 560 ohm resistor R1 activates diodes D1. The same supply of voltage is provided via 15K resistor R2 to the emittor of Q2, a BP 103B-3 phototransistor. Sensitivity of phototransistor Q2 is

0185285

adjusted via 50K ohm potentiometer R3 such that when the substantially transparent liquid 18 is present in the tube 10 at the desired level 34, Q2 conducts and no signal is produced. When the substantially transparent liquid is not present at level 34, diffusion of the light prevents activation of phototransistor Q2, and a difference signal is produced. Amplifier A is preferably an LM 311 operational amplifier, which receives this difference signal via noninverting input lead 2, and provides an output signal via output lead 7, which, in conjunction with 470 ohm resistor R5, is sufficient to activate diode D3, also an LD 271 light emitting diode. The latter diode lights to indicate that the liquid is not present at the desired level. Also illustrated are appropriate biasing resistors R4 (4.7K ohms) and R6 (2.2M ohms) and diode D2 (1N4148) as well as operational amplifier power supply lead 8 and grounded leads 4 and 1.

CLAIMS:

1. An apparatus for the detection of the presence or absence of a substantially transparent liquid at a selected level on a transparent, substantially cylindrical tube, comprising: light source means adjacent the tube and directing light across the cylindrical axis of the tube at the selected level; and light sensor means opposite the light source means with respect to the cylindrical axis of the tube, and at the same level; the light sensor means being capable of distinguishing between light focused by the substantially transparent liquid when the liquid is present at the selected level, and light diffused by the empty tube when the substantially transparent liquid is not present at the selected level.

2. An apparatus according to Claim 1 wherein the light source means comprises a light emitting diode.

3. An apparatus according to Claim 2 wherein the light sensor means comprises a phototransistor.

4. An apparatus according to Claim 3 wherein the light sensor means further comprises a comparator circuit operatively connected with the phototransistor.

5. An apparatus according to Claim 4 wherein the comparator circuit further comprises a light emitting diode providing an optical output signal.

6. An apparatus for the measurement of a column of a substantially transparent liquid on a transparent, substantially cylindrical tube, comprising: light source means adjacent the tube and directing light across the cylindrical axis of the tube; and light sensor means opposite the light source means with respect to the cylindrical axis of the tube, and; the light sensor means being capable of distinguishing between light focused by the substantially transparent liquid when the liquid is present, and light diffused by the empty tube when the substantially transparent liquid is not present, and wherein the light sensor means comprises a vertical array of optical transducers in closely spaced relation to one another, and means for determining which of the transducers are activated by light focused by the substantially transparent liquid and which are not.

1/2

FIG. 1

FIG. 2

2/2

FIG. 3